# EUROPÄISCHE PATENTSCHRIFT

(11) **EP 3 387 851 B1**
(45) Veröffentlichungstag und Bekanntmachung des Hinweises auf die Patenterteilung: **03.04.2019**
(21) Anmeldenummer: 17721085.3
(22) Anmeldetag: 26.04.2017
(51) Int. Cl.: H04W 4/40, G01C 21/34, B60L 11/18

(54) **ZUWEISUNG VON KRAFTFAHRZEUGEN ZU LADESTATIONEN**
ASSIGNING VEHICLES TO CHARGING STATIONS
ASSIGNER DES VÉHICULES À DES STATIONS DE CHARGE

(30) Priorität: 06.05.2016 DE 102016005630
(43) Veröffentlichungstag der Anmeldung: 17.10.2018
(73) Patentinhaber: AUDI AG, 85045 Ingolstadt (DE)
(72) Erfinder: WILDING, Werner, 85137 Walting (DE); MICHAEL, Jörg, 85055 Ingolstadt (DE)
(86) Internationale Anmeldenummer: PCT/EP2017/059979
(87) Internationale Veröffentlichungsnummer: WO 2017/191020

(56) Entgegenhaltungen:
- EP-A1- 2 894 436
- US-A1- 2013 261 953
- US-A1- 2015 286 965

## Beschreibung

Die vorliegende Erfindung betrifft eine Datenverarbeitungseinheit, welche eine erste Schnittstelle zum Austausch von ersten Informationen mit mindestens einem Kraftfahrzeug und eine zweite Schnittstelle zum Austausch von zweiten Informationen mit einer Vielzahl von Ladestationen zum Aufladen einer Energiespeichereinrichtung eines Kraftfahrzeugs aufweist. Darüber hinaus betrifft die vorliegende Erfindung ein Kraftfahrzeug mit einer Energiespeichereinrichtung und eine Ladestation zum Aufladen einer solchen. Schließlich betrifft die vorliegende Erfindung ein Verfahren zum Betrieb der obig genannten Datenverarbeitungseinheit.

Bisher erstellt ein Nutzer eines Kraftfahrzeugs mit einer Energiespeichereinrichtung, bei welcher eine Aufladung gewünscht wird, selbstständig eine Anfrage über die Verfügbarkeit einer bestimmten Ladestation, die zur Aufladung einer Energiespeichereinrichtung ausgelegt ist, zu einem selbst geschätzten Zeitpunkt. Die gewählte Ladestation kann eine Information darüber erteilen, ob diese zu dem angegebenen Zeitpunkt reserviert oder nicht reserviert ist. Zudem kann sie eine Auskunft darüber erteilen, ob sie aktuell belegt oder nicht belegt ist. Gegebenenfalls nimmt der Nutzer bei einer Verfügbarkeit der gewählten Ladestation eine Reservierung zu einem selbst geschätzten Ladezeitraum vor oder erstellt eine Anfrage für eine andere Ladestation. Eine genaue Berechnung der gesamten Ladedauer und des somit benötigten Ladezeitraums erfolgt erst bei der Aufladung an der Ladestation.

Nachteilig für einen Nutzer der Ladestation sind der Aufwand und die damit einhergehende Ungewissheit, einzelne Ladestationen kontaktieren zu müssen, bis sich eine Verfügbarkeit einer Ladestation ergibt. Zudem ist keine genaue vorherige Abschätzung der Ladedauer vor der Aufladung möglich. Somit können eventuelle vorherige Nutzer der Ladestation sich bei dem reservierten Ladezeitraum verschätzt haben und Wartezeiten können an der Ladestation für nachfolgende Nutzer entstehen. Nachteilig für einen Betreiber einer Ladestation, der möglicherweise über mehrere Ladestationen verfügt, ist eine fehlende Planbarkeit der Stromnetzauslastung seiner Ladestationen und mögliche auftretende Überlastungen, die zu einem Stromausfall führen können. Auch sind die Ladestationen nicht auf effiziente Art und Weise belegt, wodurch zusätzliche Wartezeiten und Kosten für Betreiber und Nutzer, und unter Umständen auch Umwege für den Nutzer entstehen können.

In diesem Zusammenhang beschreibt die DE 195 02 223 A1 ein Batterieladestationssystem für Elektrofahrzeuge, welches eine Ladestationsinformationseinheit umfasst, welche den Belegungszustand jeder der ihr registrierten Ladestation erfasst. Ein Benutzer kann sich per Fernabfrage über den Belegungszustand der Ladestation an einem gewünschten Ort und zu einem gewünschten Zeitpunkt informieren und gegebenenfalls eine Reservierung der Ladestation für einen selbst geschätzten Zeitraum vornehmen.

Aus der DE 10 2010 064 015 A1 ist eine Batterieladestation zum Laden eines Elektrofahrzeugs bekannt, welche eine Sende- und Empfangsvorrichtung aufweist, welche mit einer Bedieneinheit des Elektrofahrzeugs kommuniziert. Des Weiteren umfasst die Batterieladestation eine Steuer- und Auswerteeinheit, die dazu ausgebildet ist, eine Reservierungsanfrage der Bedieneinheit des Elektrofahrzeugs zu empfangen und in Abhängigkeit dieser Reservierungsanfrage eine Verfügbarkeit der Ladestation zu ermitteln. Gegebenenfalls führt die Steuer- und Auswerteeinheit eine Reservierung an der Ladestation durch oder kommuniziert mittels einer zweiten Empfangs- und Sendevorrichtung mit wenigstens einer weiteren Ladestation, um deren Verfügbarkeit zu prüfen und gegebenenfalls eine Reservierung bei dieser Ladestation vorzunehmen. Weiterhin umfasst die Bedieneinheit des Elektrofahrzeugs eine Datenverarbeitungseinheit, die aus einer Mehrzahl an Batterieladestationen in Abhängigkeit eines Zielorts eine Batterieladestation auswählt und die Reservierungsanfrage an eine möglichst in der Nähe des Zielorts liegende Batterieladestation sendet. Die Reservierungsanfrage enthält eine voraussichtliche Ankunftszeit des Elektrofahrzeugs an der Ladestation, jedoch wird der benötigte Zeitraum zum Laden des Elektrofahrzeugs lediglich anhand des Fahrzeugtyps geschätzt. Nachteilig ist zudem, dass die erste ausgewählte Ladestation nicht immer derjenigen Ladestation entspricht, bei welcher der Nutzer am schnellsten oder am kostengünstigsten sein Elektrofahrzeug aufladen könnte und dass diesbezüglich keine Planbarkeit gegeben ist.

In einer alternativen Ausführungsform beschreibt die DE 10 2010 064 015 A1, dass die Reservierungsanfrage einen Ladezustand des Elektrofahrzeugs enthält und die Steuer- und Auswerteeinheit der Ladestation eine Dauer für einen Ladevorgang abschätzt, jedoch beschreibt die DE 10 2010 064 015 A1 nicht, wie und anhand welcher Parameter eine solche Abschätzung erfolgt.

In der DE 10 2012 203 121 A1 ist ein Energiemanagementsystem beschrieben, welches ein Netzwerk zur Übertragung und Verteilung von elektrischer Energie umfasst und an welches Erzeugungseinrichtungen und Verbrauchseinrichtungen gekoppelt sind. Das Energiemanagementsystem umfasst weiterhin Prognosemittel, die Energieverbrauchsprognosen für die Verbrauchseinrichtungen erstellt. Ferner beschreibt die DE 10 2012 203 121 A1, dass die Prognosemittel dazu ausgebildet sind, für eine als Ladestation für Fahrzeuge mit aufladbaren Energiespeichern eine Energieverbrauchsprognose aus voraussichtlichen Ankunftszeiten der Fahrzeuge an der Ladestation und deren voraussichtlichen Ladezuständen ihrer Energiespeicher zu erstellen. Der voraussichtliche Ladezustand und eine voraussichtliche Ankunftszeit des Fahrzeugs an der Ladestation sind über ein Positionsbestimmungssystem des Fahrzeugs an die Prognosemittel übertragbar. Die DE 10 2012 203 121 A1 befasst sich allerdings nicht mit einer Auswahl einer Ladestation aus einer Vielzahl von Ladestationen und somit auch nicht mit dem Fall, wenn keine Verfügbarkeit an einer bestimmten Ladestation zu der voraussichtlichen Ankunftszeit für das Fahrzeug besteht. Ein Reservierungsvorgang wird auch nicht beschrieben.

Aus der US 2013/0261953 A1 ist ein Routensuchsystem zum Ermitteln einer Route zwischen zwei Punkten für ein Elektrofahrzeug bekannt, wobei ermittelt wird, ob das Elektrofahrzeug entlang der Route aufgeladen werden muss. In diesem Fall beinhaltet die Route einen Zwischenstopp an einer bestimmten Ladestation.

Aus der EP 2 894 436 A1 ist ein Lade-Unterstützungssystem für ein Elektrofahrzeug bekannt, wobei aus einer Vielzahl von Elektrofahrzeugen mit einem Fahrzustand des Elektrofahrzeugs zusammenhängende Elektrofahrzeug-Informationen erfasst werden. Weiterhin werden aus einer Vielzahl von Ladestationen mit einem Gerätezustand und einem Gebrauchszustand des Elektrofahrzeugs zusammenhängende Ladestation-Informationen erfasst. Basierend auf den Elektrofahrzeug-Informationen wird ein Elektrofahrzeug erkannt, welches geladen werden muss, um von einem aktuellen Standort aus ein bestimmtes Ziel zu erreichen, und basierend auf den Ladestation-Informationen wird eine bestimmte Ladestation für das Elektrofahrzeug ausgewählt.

Aus der US 2015/0286965 A1 ist ein Reservierungssystem zum Reservieren einer Ladestation zum Laden einer Stromquelle eines Elektroautos bekannt. Wenn ein Batteriestand eines Fahrzeugs unter einem ersten Schwellenwert fällt, wird nach einer Ladestation innerhalb eines vorbestimmten Umfelds von einem aktuellen Standort des Fahrzeugs aus gesucht. Über ermittelte voraussichtliche Ankunftszeitpunkte an der Ladestation wird die Reservierung getätigt.
Aufgabe der vorliegenden Erfindung ist es, eine Möglichkeit zu schaffen, einerseits für Nutzer von Kraftfahrzeugen mit mindestens einer Energiespeichereinrichtung eine zuverlässige und vereinfachte Planung einer Benutzung einer Ladestation zum Aufladen dieser Energiespeichereinrichtung bereitzustellen und Wartezeiten an der Ladestation möglichst zu reduzieren, und andererseits für Betreiber derartiger Ladestationen diese möglichst effizient nutzen zu lassen und Überlastungen des Stromnetzes zu vermeiden.

Diese Aufgabe wird durch eine Datenverarbeitungseinheit mit den Merkmalen des Patentanspruchs 1, einem Kraftfahrzeug mit den Merkmalen des Patentanspruchs 10, einer Ladestation mit den Merkmalen des Patentanspruchs 12 und einem Verfahren zum Betrieb einer Datenverarbeitungseinheit mit den Merkmalen des Patentanspruchs 13 gelöst. Vorteilhafte Weiterbildungen der vorliegenden Erfindung sind Gegenstand der abhängigen Ansprüche.

Die vorliegende Erfindung basiert auf der Erkenntnis, dass eine Verbesserung der Kommunikation zwischen Kraftfahrzeugen und Ladestationen zum Aufladen einer Energiespeichereinrichtung der Kraftfahrzeuge zu einer Verbesserung des Ladevorgangs sowohl für den Nutzer als auch für den Betreiber der Ladestation führt. Erfindungsgemäß findet eine solche Kommunikation über eine Datenverarbeitungseinheit statt, welche Informationen von Kraftfahrzeugen wie auch von Ladestationen zum Aufladen derartiger Kraftfahrzeuge empfängt, verwaltet und auswertet. Dabei weist die Datenverarbeitungseinheit eine erste und eine zweite Schnittstelle zum Austauschen von ersten und zweiten Informationen mit jeweils einem und/oder mehreren Kraftfahrzeugen und mit jeweils einer und/oder mehreren Ladestationen auf.

Des Weiteren basiert die vorliegende Erfindung auf der Erkenntnis, dass eine effiziente Nutzung und eine verbesserte Planbarkeit der Nutzung einer bestimmten Ladestation erfolgt, wenn eine Zuweisung eines bestimmten Kraftfahrzeugs, bei welchem eine Aufladung erwünscht wird, zu einer bestimmten Ladestation und zu einem bestimmten Zeitpunkt eines Ladebeginns mittels einer bestimmten Strategie ausgeführt wird. Diese Strategie verfügt einen ganzheitlichen Überblick über eines insgesamt benötigten Ladestroms von wenigstens einem Kraftfahrzeug und eine insgesamt zur Verfügung stehende Ladeleistung von wenigstens einer Ladestation und kann die Zuweisung unter Berücksichtigung wenigstens eines bestimmbaren Parameters ausführen. Dieser Parameter ist von dem Nutzer einer Ladestation als auch von dem Betreiber einer Ladestation vorgebbar.

Bei Empfang erster Information, die einen Ladezustand zu einem Zeitpunkt einer gewünschten Aufladung der Energiespeichereinrichtung und eine maximale Ladeleistung mindestens eines Kraftfahrzeugs betrifft, und zweiter Information, die eine zu einem vorgebbaren Zeitpunkt an mindestens einer Ladestation verfügbare Ladeleistung betrifft, führt die Datenverarbeitungseinheit die Ermittlung einer geeigneten Ladestation zu einem geeigneten Zeitpunkt des Ladebeginns aus.

Durch eine solche Datenverarbeitungseinheit werden auf einer einzigen Plattform Daten von Kraftfahrzeuge, insbesondere von Kraftfahrzeugen mit einer Energiespeichereinrichtung, und Daten von Ladestationen für derartige Kraftfahrzeuge zusammengeführt und ausgewertet. Somit sind Informationen über die Kraftfahrzeuge und die Ladestationen jedem Nutzer und Betreiber dieser jederzeit gleichzeitig zugänglich. Eine Aktualisierung der Informationen beider Seiten ist für jeden zeitnah einsehbar. Dem Nutzer einer Ladestation wird im Vergleich zum Stand der Technik eine größere und übersichtlichere Auswahl an Ladestationen geboten, der Betreiber einer Ladestation oder mehrerer Ladestationen bekommt einen Überblick über potentielle Kunden, welcher ihm ermöglicht, seine verfügbare Ladeinfrastruktur besser zu verwalten. Dem Nutzer einer Ladestation wird einerseits die Möglichkeit geboten, anhand von Parametern selbst festzulegen, welche Ladestationen möglicherweise bevorzugt werden, andererseits besteht für den Betreiber auch die Möglichkeit, sich eine Übersicht über potentielle Kunden zu verschaffen und auch Parameter festzulegen, anhand welchen ein Kunde möglicherweise dem anderen vorgezogen wird.

Die Datenverarbeitungseinheit erstellt eine Strategie, die die vorgebbaren Parameter der Nutzer und der Betreiber der Ladestationen berücksichtigt und die somit eine automatische Zuweisung eines Kraftfahrzeugs zu einer Ladestation erstellt, wodurch für den Nutzer Zeit bei der Suche nach einer geeigneten Ladestation erspart wird. Durch die Zuweisung eines Kraftfahrzeugs mit einem gegebenen Ladezustand und einer maximalen Ladeleistung wird dem Betreiber der Ladestation die Information geboten, wie viel seiner verfügbaren Ladeleistung zu einem gegebenen Zeitpunkt benötigt wird. Dadurch kann der Betreiber seine Stromnetzauslastung an der Ladestation planen und die Ladestation so betreiben, dass das Stromnetz stabil und schwankungsarm gehalten wird.

In vorteilhafter Ausgestaltung der Erfindung ist die Datenverarbeitungseinheit derart ausgelegt, dass diese bei einer Zuweisung eines bestimmten Kraftfahrzeugs zu einer bestimmten Ladestation und zu einem bestimmten Zeitpunkt des Ladebeginns durch die ersten und zweiten Informationen über den Ladezustand und der maximalen Ladeleistung des Kraftfahrzeugs und der verfügbaren Ladeleistung an der Ladestation zu dem Zeitpunkt des Ladebeginns eine Ladedauer zum Aufladen der Energiespeichereinrichtung des bestimmten Kraftfahrzeugs ermittelt. Durch die Kenntnis des Zeitpunkts des Ladebeginns und der Ladedauer mehrerer bestimmter Kraftfahrzeuge ist es möglich, die verfügbare Ladeleistung an einer Ladestation effizient über einen längeren Zeitraum zu verteilen. Ladezeiträume können möglicherweise so vergeben werden, dass zeitliche Lücken an der Ladestation, zu denen wenig oder keine Kraftfahrzeuge aufladen, geschlossen werden. Auch können Wartezeiten an der Ladestation durch eine genaue Kenntnis der Ladedauer reduziert werden. Der Nutzer einer Ladestation kann besser einplanen, wie lange er sich beispielsweise während dem Ladevorgang seines Kraftfahrzeugs von diesem entfernen kann, um beispielsweise Erledigungen zu tätigen.

In einer bevorzugten Ausführungsform der Datenverarbeitungseinheit ist wenigstens einer der vorgebbaren Parameter derart ausgebildet, dass ein bestimmtes Kraftfahrzeug zu derjenigen Ladestation zugewiesen wird, bei der eine größtmöglichste Nutzung der verfügbaren Ladeleistung an der Ladestation zu dem Zeitpunkt des Ladebeginns erfolgt. Für den Nutzer der Ladestation bedeutet dies, dass sein Kraftfahrzeug bevorzugt an derjenigen Ladestation auflädt, bei der ihm die höchste Ladeleistung zur Verfügung steht und somit die kürzeste Ladedauer benötigt wird, unter Berücksichtigung der maximalen Ladeleistung seines Kraftfahrzeugs. Für den Betreiber der Ladestation bedeutet dies, dass er einen größtmöglichen Nutzen seiner verfügbaren Ladeleistung sicherstellen kann, bevorzugt lädt dasjenige Kraftfahrzeug an einer bestimmten Ladestation auf, bei welches es durch seine maximale Ladeleistung am meisten der verfügbaren Ladeleistung nutzen kann. So kann der Betreiber in einem bestimmten Zeitraum eine größtmögliche Menge an Ladestrom verkaufen. Das Kraftfahrzeug mit einer geringeren maximalen Ladeleistung wird derjenigen Ladestation zugewiesen, bei der weniger Ladeleistung zur Verfügung steht, die aber für dieses bestimmte Kraftfahrzeug ausreichend ist. Somit kann auch der Nutzer letzterer Ladestation Kosten einsparen, da Ladestationen mit Ladesteckersysteme, die für hohe Ladeleistungen ausgelegt sind, teurer sein könnten.

In weiterer vorteilhafter Ausgestaltung der Erfindung ist die Datenverarbeitungseinheit derart ausgelegt, dass diese bei Empfang einer weiteren Information über eine aktuelle Position eines bestimmten Kraftfahrzeugs und über eine Anfrage einer Ansteuerung eines Zielortes durch ein Positionsbestimmungsmittel des Kraftfahrzeugs den Ladezustand des Kraftfahrzeugs entlang einer Strecke zwischen der aktuellen Position des Kraftfahrzeugs und dem Zielort ermittelt und einen Zeitpunkt einer empfohlenen Aufladung der Energiespeichereinrichtung und den Ladezustand zu diesem Zeitpunkt ermittelt. Dadurch muss der Nutzer des Kraftfahrzeugs bei der Suche nach einer geeigneten Ladestation nicht mehr selbst den Ladezustand der Energiespeichereinrichtung seines Kraftfahrzeugs zum Zeitpunkt eines möglichen Ladebeginns schätzen. Die Datenverarbeitungseinheit berechnet durch die Kenntnis der gefahrenen Strecke, dem Ladezustand des bestimmten Kraftfahrzeugs an seiner aktuellen geographischen Position und die geographische Position einer oder mehrerer Ladestationen entlang der Strecke wo und zu welchem Zeitpunkt wie hoch der Ladezustand der Energiespeichereinrichtung des Kraftfahrzeugs beträgt. Durch vorgebbare Parameter erstellt die Datenverarbeitungseinheit eine Strategie, die dem Kraftfahrzeug eine bestimmte oder mehrere bestimmte Ladestation entlang der Strecke zuweist. Die Planung der insgesamt zu fahrenden Strecke berücksichtigt die Aufenthalte an einer oder mehrerer zugewiesener Ladestationen. Der Zeitpunkt des Ladebeginns an der Ladestation wird genau berechnet, beispielsweise kann über das Positionsbestimmungsmittel des Kraftfahrzeugs Informationen über das aktuelle Verkehrsaufkommen auf der Strecke an die Datenverarbeitungseinheit übermittelt werden, die diese in der Bestimmung des Zeitpunkt des Ladebeginns und des Ladezeitraums mit einbezieht. Auch die Ladedauer kann erneut berechnet werden, wenn sich beispielsweise der Zeitpunkt des Ladebeginns durch ein starkes Verkehrsaufkommen verschiebt und die verfügbare Ladeleistung sich ändert. Dadurch kann der Betreiber der Ladestation noch besser planen, wann wieviel der verfügbaren Ladeleistung und des gesamten Ladestroms benötigt wird. Vorteilhaft ist zudem, dass der Nutzer des Kraftfahrzeugs besser planen kann, wann er am Zielort eintrifft, indem das Positionsbestimmungsmittel Aufenthalte an der Ladestation mit einbezieht. Vorteilhaft für den Nutzer des Kraftfahrzeugs ist weiterhin die Tatsache, dass er nicht im Vorfeld Aufenthalte an Ladestationen planen muss und seine Ankunftszeit am Zielort neu berechnen muss. Besonders vorteilhaft ist dies für Fahrten längerer Strecke, bei der es von Nöten sein könnte, ein Kraftfahrzeug beispielsweise mehrfach an nicht bekannten Orten aufzuladen. So kann der Nutzer des Kraftfahrzeugs Fahrpausen mit Aufenthalte an den Ladestationen kombinieren.

Bevorzugt ist die Datenverarbeitungseinheit weiterhin derart ausgelegt, dass diese bei Empfang der weiteren Information über eine Anfrage einer Ansteuerung eines Zielortes über das Positionsbestimmungsmittel des bestimmten Kraftfahrzeugs automatisch eine Reservierung einer der von der Strategie ermittelten geeigneten Ladestation zu einem ermittelten geeigneten Zeitpunkt eines Ladebeginns und über die errechnete Ladedauer vornimmt. Somit vereinfacht sich für den Nutzer der Reservierungsprozess der Ladestation. Beispielsweise kann der Nutzer im Vorhinein Parameter festlegen, anhand welchen seinem Kraftfahrzeug bevorzugt eine bestimmte Ladestation zu einem bestimmten Ladezeitpunkt zugewiesen wird. Die Reservierung ist individuell an die Wünsche des Nutzers angepasst.

In einer weiteren vorteilhaften Ausgestaltung der Erfindung ist die Datenverarbeitungseinheit derart ausgelegt, dass diese eine weitere Information über eine Zustimmung oder eine Ablehnung einer Zuweisung eines bestimmten Kraftfahrzeugs zu einer der Ladestationen und zu einem bestimmten Zeitpunkt des Ladebeginns empfängt. Dadurch lässt sich ein vom Nutzer des Kraftfahrzeugs ungewünschter automatisierter Reservierungsprozess vermeiden.

Bevorzugt ist die Datenverarbeitungseinheit weiterhin derart ausgelegt, dass diese bei Empfang einer Ablehnung der Zuweisung mindestens eine alternative Zuweisung mit einer alternativen Ladestation und/oder einem alternativen Zeitpunkt des Ladebeginns für das bestimmte Kraftfahrzeug erstellt. Beispielsweise kann der Nutzer aus einer Liste mit mehreren Vorschlägen über Ladestationen und/oder Zeitpunkten des Ladebeginns selbst wählen, welcher Vorschlag ihm am meisten zusagt. Dies ist besonders vorteilhaft, wenn der Nutzer vorgegebene Parameter zur Erstellung der Strategie der Zuweisung einer Ladestation oft wechselt oder sich deren unschlüssig ist.

Bevorzugt ist die Datenverarbeitungseinheit ferner derart ausgelegt, dass diese bei Empfang einer Zustimmung der Zuweisung eine automatische Reservierung der zugewiesenen Ladestation zu dem zugewiesenen Zeitpunkt des Ladebeginns und über die errechnete Ladedauer für das bestimmte Kraftfahrzeug vornimmt. Vorteilhaft ist, dass keine Reservierung einer Ladestation erfolgt, ohne eine explizite Zustimmung des Nutzers des Kraftfahrzeugs erhalten zu haben. Dadurch lassen sich Fehlreservierungen verringern.

In einer weiteren bevorzugten Ausführungsform der Datenverarbeitungseinheit ist diese derart ausgelegt, dass nach einer vorgenommenen Reservierung einer bestimmten Ladestation für mindestens ein Kraftfahrzeug die Datenverarbeitungseinheit die verfügbare Ladeleistung an der Ladestation für einen vorgebbaren Zeitpunkt neu berechnet. Dadurch ist sichergestellt, dass Veränderungen in der verfügbaren Ladeleistungen laufend aktualisiert werden und weitere potentielle Nutzer der Ladestation zeitnah darüber informiert werden. Somit können sich überschneidende Reservierungen der Ladestation vermieden werden. Der Betreiber der Ladestation ist auch jederzeit über der benötigten Ladeleistung zu einem vorgegebenen Zeitpunkt an der Ladestation informiert.

Das erfindungsgemäße Kraftfahrzeug umfasst eine Energiespeichereinrichtung und eine Schnittstelle zum Austauschen von Informationen mit einer obig beschriebenen Datenverarbeitungseinheit. Die Schnittstelle ist derart ausgelegt, Informationen über einen aktuellen Ladezustand der Energiespeichereinrichtung und eine maximale Ladeleistung des Kraftfahrzeugs zu senden. Das Kraftfahrzeug ist derart ausgelegt, dass es bei Empfang einer Zuweisung zu einer Ladestation und zu einem Zeitpunkt eines Ladebeginns dem Nutzer eine Möglichkeit einer Zustimmung oder einer Ablehnung der Zuweisung bereitstellt.

Bevorzugt umfasst das Kraftfahrzeug ein Positionsbestimmungsmittel, welches derart ausgelegt ist, dass dieses Informationen mit der Schnittstelle austauscht, und die Schnittstelle ausgelegt ist, Informationen über eine Position des Kraftfahrzeugs und über eine Ansteuerung eines Zielortes zu an die Datenverarbeitungseinheit zu senden.

Die erfindungsgemäße Ladestation zum Aufladen einer Energiespeichereinrichtung eines Kraftfahrzeugs umfasst eine Schnittstelle zum Austauschen von Informationen mit einer obig beschriebenen Datenverarbeitungseinheit. Die Schnittstelle ist ausgelegt, Informationen über eine verfügbare Ladeleistung zu einem vorgebbaren Zeitpunkt zu senden.

Die zuvor im Zusammenhang mit der erfindungsgemäßen Datenverarbeitungseinheit beschriebenen Vorteile und Weiterbildungen gelten sinngemäß für das erfindungsgemäße Kraftfahrzeug und die erfindungsgemäße Ladestation.

Das erfindungsgemäße Verfahren zum Betrieb einer Datenverarbeitungseinheit, welche mittels einer ersten Schnittstelle erste Informationen mit mindestens einem Kraftfahrzeug und mittels einer zweiten Schnittstelle zweite Informationen mit einer Vielzahl von Ladestationen zum Aufladen einer Energiespeichereinrichtung eines Kraftfahrzeugs austauscht, beinhaltet in einem ersten Schritt das Erfassen eines Ladezustands zu einem Zeitpunkt einer gewünschten Aufladung der Energiespeichereinrichtung mindestens eines bestimmten Kraftfahrzeugs. In einem zweiten Schritt wird eine verfügbare Ladeleistung zu dem Zeitpunkt einer gewünschten Aufladung des bestimmten Kraftfahrzeugs an wenigstens einer Ladestation ermittelt. In einem letzten Schritt wird eine Strategie erstellt, bei der einem bestimmten Kraftfahrzeug eine bestimmte Ladestation und ein bestimmter Zeitpunkt eines Ladebeginns unter Berücksichtigung wenigstens eines vorgebbaren Parameters zugewiesen wird.

Die zuvor im Zusammenhang mit der erfindungsgemäßen Datenverarbeitungseinheit beschriebenen Vorteile und Weiterbildungen gelten sinngemäß für das erfindungsgemäße Verfahren zum Betrieb einer solchen Datenverarbeitungseinheit.

Das erfindungsgemäße System umfasst eine Datenverarbeitungseinheit, wenigstens ein Kraftfahrzeug und wenigstens eine Ladestation, wobei die Datenverarbeitungseinheit eine erste Schnittstelle aufweist, über welche erste Informationen mit dem Kraftfahrzeug, welches ebenfalls eine Schnittstelle zur Kommunikation mit dieser aufweist, ausgetauscht werden. Des Weiteren umfasst die Datenverarbeitungseinheit eine zweite Schnittstelle, über welche zweite Informationen mit der Ladestation ausgetauscht werden. Dabei beinhalten erstere Informationen einen aktuellen Ladezustand einer Energiespeichereinrichtung eines bestimmten Kraftfahrzeugs und eine maximale Ladeleistung dieses. Die zweiten Informationen umfassen eine verfügbare Ladeleistung einer bestimmten Ladestation zu einem vorgebbaren Zeitpunkt. Die Datenverarbeitungseinheit ist dazu ausgelegt, bei Empfang erster und zweiter Information eine Strategie zu erstellen, bei der einem bestimmten Kraftfahrzeug eine bestimmte Ladestation und ein bestimmter Zeitpunkt eines Ladebeginns unter Berücksichtigung wenigstens eines vorgebbaren Parameters zugewiesen wird.

Die zuvor im Zusammenhang mit der erfindungsgemäßen Datenverarbeitungseinheit, dem erfindungsgemäßen Kraftfahrzeug und der erfindungsgemäßen Ladestation beschriebenen Vorteile und Weiterbildungen gelten sinngemäß für das erfindungsgemäße System mit einer Datenverarbeitungseinheit, wenigstens einem Kraftfahrzeug und wenigstens einer Ladestation.

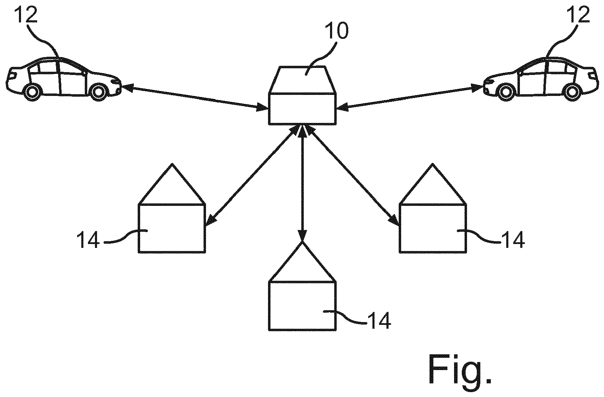

Vorliegende Erfindung wird nun anhand der beigefügten Zeichnung näher erläutert. Dabei zeigt die einzige Figur eine schematische Darstellung einer Datenverarbeitungseinheit, welche über Schnittstellen mit Kraftfahrzeugen und Ladestationen zur Aufladung von Energiespeichereinrichtungen von Kraftfahrzeugen kommuniziert.

Die nachfolgend näher geschilderten Ausführungsbeispiele stellen bevorzugte Ausführungsformen der vorliegenden Erfindung dar.

In der Figur (Fig.) wird eine Datenverarbeitungseinheit 10 schematisch dargestellt. Diese tauscht über eine erste Schnittstelle erste Informationen mit mindestens einer, hier dargestellt zwei Kraftfahrzeuge 12 mit jeweils einer Energiespeichereinrichtung aus. Diese Informationen beinhalten den Zeitpunkt einer gewünschten Aufladung der Energiespeichereinrichtung und einen Ladezustand zu diesem Zeitpunkt. Des Weiteren beinhält diese eine maximale mögliche Ladeleistung des Kraftfahrzeugs 12. Beispielsweise können diese Informationen manuell von einen Nutzer des Kraftfahrzeugs 12 eingegeben werden und über die erste Schnittstelle an die Datenverarbeitungseinheit 10 versendet werden. Die Informationen können aber auch über ein Bordgerät des Kraftfahrzeugs 12, welches mit der Energiespeichereinrichtung kommuniziert, über die erste Schnittstelle automatisch an die Datenverarbeitungseinheit 10 gesendet werden. Auch kann beispielsweise das Kraftfahrzeug 12 ein Positionsbestimmungsmittel aufweisen, welches über die erste Schnittstelle Informationen mit der Datenverarbeitungseinheit 10 austauscht. Beispielsweise kann das Positionsbestimmungsmittel in dem Kraftfahrzeug 12 selbst in das Bordgerät eingebaut sein, oder als tragbares Navigationsgerät oder als in ein Mobiltelefon eingebautes Navigationsgerät ausgebildet sein. Das Positionsbestimmungsmittel sendet Informationen über eine aktuelle Position des Kraftfahrzeugs 12, einem angesteuerten Zielort und einer gewählten Strecke zwischen der aktuellen Position und dem Zielort. Die Datenverarbeitungseinheit 10 ermittelt bei Empfang dieser Informationen den Ladezustand des Kraftfahrzeugs 12 entlang der Strecke und Zeiträume eventuell benötigter Aufladungen.

Weitere Informationen können über die erste Schnittstelle an die Datenverarbeitungseinheit 10 zur Auswertung gesendet werden. Beispielsweise empfängt diese Informationen über technische Eigenschaften eines Kraftfahrzeugs 12, wie die des vorhandenen Ladesteckersystems, einer bestehenden Möglichkeit eines induktiven Aufladens des Kraftfahrzeugs 12 oder einem durchschnittlichem Energieverbrauch pro gefahrenen Streckenabschnitt. Einem bestimmten Kraftfahrzeug 12 kann ein bestimmtes Kundenprofil zugeteilt werden, welches die obig genannten Eigenschaften des Kraftfahrzeugs 12 speichert und über weitere Details, wie beispielsweise einem gewünschten Bezahlmodell, einem gewünschten Betreiber einer Ladestation 14 oder einer gesammelten Punktanzahl im Rahmen eines Stammkundenbelohnungsmodells verfügt. Weiterhin kann der Nutzer festlegen, inwieweit er die Energiespeichereinrichtung seines Kraftfahrzeugs 12 aufladen möchte oder bei welchem Ladezustand er eine Aufladung erwünscht.

Über eine zweite Schnittstelle tauscht die Datenverarbeitungseinheit 10 zweite Informationen mit einer oder mehrerer Ladestationen 14 aus. Diese können in Form von Parkhäusern, hier beispielsweise abgebildet drei, die jeweils eine oder mehrere Ladestationen 14 verfügen an denen jeweils die Möglichkeit besteht, die Energiespeichereinrichtung eines Kraftfahrzeugs 12 aufzuladen, ausgebildet sein. Beispielsweise verfügt ein Betreiber über mehrere Ladestationen 14 innerhalb eines Parkhauses oder mehrere Parkhäuser. Die Ladestationen 14 des Betreibers tauschen über Schnittstellen Informationen über ihre verfügbare Ladeleistung zu einem bestimmbaren Zeitpunkt aus. Weiterhin können beispielsweise Informationen über verfügbare Ladesteckersysteme, die Verfügbarkeit induktiver Ladestellplätze oder die Höhe der Preise des Ladestroms an den verschiedenen Ladestationen 14 an die Datenverarbeitungseinheit 10 gesendet werden.

Bei Empfang erster und zweiter Informationen erstellt die Datenverarbeitungseinheit 10 eine Strategie, welche einem bestimmten Kraftfahrzeug 12 eine bestimmte Ladestation 14 zu einem bestimmten Zeitpunkt eines Ladebeginns unter Berücksichtigung vorgebbarer Parameter zuweist. Diese Parameter kann ein Nutzer eines Kraftfahrzeugs 12 als auch ein Betreiber einer Ladestation 14 angeben. Beispielsweise kann ein Nutzer ein Zeitfenster festlegen, innerhalb welches er eine Aufladung seines Kraftfahrzeugs 12 erwünscht. Des Weiteren kann er beispielsweise eine maximale Abweichung seiner gefahrenen Strecke zur Erreichung einer Ladestation 14 oder ein maximalen Preis, den er bereit ist für einen Ladestrom zu bezahlen, einstellen. Weiterhin kann der Betreiber der Ladestation 14 festlegen, zu welchem Zeitpunkt er über wieviel Ladestrom zur Verfügung stellen möchte und über welche maximale Ladeleistung seine Ladestation 14 verfügt. Diese wird von der Strategie der Datenverarbeitungseinheit 10 berücksichtigt, um Überlastungen des Stromnetzes der Ladestation 14 zu vermeiden. Weiterhin kann der Betreiber Parameter festlegen, die die Zuweisung von Kraftfahrzeugen 12 über seine gesamten verfügbaren Ladestationen 14 effizient verteilt und zeitliche Lücken möglichst vermeidet. Auch kann er einem bestimmten Kundenprofil Vorrang geben, beispielsweise weil der bestimmte Kunde innerhalb eines bestimmten Zeitraums mehr Strom durch eine größere maximale Ladeleistung seiner Energiespeichereinrichtung als ein anderer Kunde mit einer Energiespeichereinrichtung mit einer geringeren Ladeleistung tanken kann.

Die Datenverarbeitungseinheit 10 prüft die Kompatibilität der Parameter beider Seiten, des Nutzers als auch des Betreibers, und erstellt die Zuweisung. Die Reservierung einer bestimmten Ladestation 14 kann automatisch durch die Datenverarbeitungseinheit 10 vorgenommen werden und dem Nutzer über die erste Schnittstelle mitgeteilt werden. Beispielsweise kann das Navigationsgerät des Kraftfahrzeugs 12 automatisch einen Aufenthalt an der reservierten Ladestation 14 ansteuern und dies in der Berechnung der Ankunftszeit am Zielort mit einplanen. Die Reservierung einer bestimmten Ladestation 14 kann aber auch erst beispielsweise dann erfolgen, wenn der Nutzer die Zuweisung akzeptiert. Andernfalls kann dem Nutzer mindestens eine Alternative oder eine Liste an Alternativen geboten werden, wobei der Nutzer eine alternative Ladestation 14 und/oder ein alternativer Zeitpunkt eines Ladebeginns auswählt. Nach Reservierung einer bestimmten Ladestation 14 zu einem Zeitpunkt eines Ladebeginns und über einer von der Datenverarbeitungseinheit 10 errechneten Ladedauer ermittelt diese die restliche verfügbare Ladeleistung an der Ladestation 14 nach Abzug der benötigten Ladeleistung zur Aufladung der Energiespeichereinrichtung des reservierten Kraftfahrzeugs (12) und aktualisiert diese Information.

## Patentansprüche

1. Datenverarbeitungseinheit (10), welche eine erste Schnittstelle zum Austauschen von ersten Informationen mit einer Vielzahl von Kraftfahrzeugen (12) und eine zweite Schnittstelle zum Austauschen von zweiten Informationen mit einer Vielzahl von Ladestationen (14) zum Aufladen einer Energiespeichereinrichtung eines Kraftfahrzeugs (12) umfasst, wobei die Datenverarbeitungseinheit (10) dazu ausgelegt ist, bei Empfang erster Information, die einen Ladezustand zu einem Zeitpunkt einer gewünschten Aufladung der Energiespeichereinrichtung und eine maximale Ladeleistung mindestens eines Kraftfahrzeugs (12) betrifft, und zweiter Information, die eine zu einem vorgebbaren Zeitpunkt an mindestens einer Ladestation (14) verfügbare Ladeleistung betrifft, eine Strategie zu erstellen, bei der einem bestimmten Kraftfahrzeug (12) eine bestimmte Ladestation (14) und ein bestimmter Zeitpunkt eines Ladebeginns unter Berücksichtigung wenigstens eines vorgebbaren Parameters zugewiesen wird,
**dadurch gekennzeichnet, dass**
wenigstens einer der vorgebbaren Parameter derart ausgebildet ist, dass ein bestimmtes Kraftfahrzeug (12) zu derjenigen Ladestation (14) zugewiesen wird, bei der eine größtmöglichste Nutzung der verfügbaren Ladeleistung an der Ladestation (14) zu dem Zeitpunkt des Ladebeginns erfolgt.

2. Datenverarbeitungseinheit (10) nach Anspruch 1,
**dadurch gekennzeichnet, dass**
die Datenverarbeitungseinheit (10) derart ausgelegt ist, dass diese bei einer Zuweisung eines bestimmten Kraftfahrzeugs (12) zu einer bestimmten Ladestation (14) und zu einem bestimmten Zeitpunkt des Ladebeginns durch die ersten und zweiten Informationen über den Ladezustand und der maximalen Ladeleistung des Kraftfahrzeugs (12) und der verfügbaren Ladeleistung an der Ladestation (14) zu dem Zeitpunkt des Ladebeginns eine Ladedauer zum Aufladen der Energiespeichereinrichtung des bestimmten Kraftfahrzeugs (12) ermittelt.

3. Datenverarbeitungseinheit (10) nach einem der voranstehenden Ansprüche,
**dadurch gekennzeichnet, dass**
die Datenverarbeitungseinheit (10) derart ausgelegt ist, dass diese bei Empfang einer weiteren Information über eine aktuelle Position eines bestimmten Kraftfahrzeugs (12) und über eine Anfrage einer Ansteuerung eines Zielortes durch ein Positionsbestimmungsmittel des Kraftfahrzeugs (12) und über die erste Schnittstelle den Ladezustand des Kraftfahrzeugs (12) entlang einer Strecke zwischen der aktuellen Position des Kraftfahrzeugs (12) und dem Zielort ermittelt und einen Zeitpunkt einer empfohlenen Aufladung der Energiespeichereinrichtung und den Ladezustand zu diesem Zeitpunkt ermittelt.

4. Datenverarbeitungseinheit (10) nach Anspruch 3,
**dadurch gekennzeichnet, dass**
die Datenverarbeitungseinheit (10) derart ausgelegt ist, dass diese bei Empfang der weiteren Information über eine Anfrage einer Ansteuerung eines Zielortes über das Positionsbestimmungsmittel des bestimmten Kraftfahrzeugs (12) automatisch eine Reservierung einer der von der Strategie ermittelten geeigneten Ladestation (14) zu einem ermittelten geeigneten Zeitpunkt eines Ladebeginns und über die errechnete Ladedauer vornimmt.

5. Datenverarbeitungseinheit (10) nach einem der Ansprüche 1 bis 3,
**dadurch gekennzeichnet, dass**
die Datenverarbeitungseinheit (10) derart ausgelegt ist, dass diese eine weitere Information über eine Zustimmung oder eine Ablehnung einer Zuweisung eines bestimmten Kraftfahrzeugs (12) zu einer der Ladestationen (14) und zu einem bestimmten Zeitpunkt des Ladebeginns über die erste Schnittstelle empfängt.

6. Datenverarbeitungseinheit (10) nach Anspruch 5,
**dadurch gekennzeichnet, dass**
die Datenverarbeitungseinheit (10) derart ausgelegt ist, dass sie bei Empfang einer Ablehnung der Zuweisung mindestens eine alternative Zuweisung mit einer alternativen Ladestation (14) und/oder einem alternativen Zeitpunkt des Ladebeginns für das bestimmte Kraftfahrzeug (12) erstellt.

7. Datenverarbeitungseinheit (10) nach Anspruch 5 oder 6,
**dadurch gekennzeichnet, dass**
die Datenverarbeitungseinheit (10) derart ausgelegt ist, dass sie bei Empfang einer Zustimmung der Zuweisung eine automatische Reservierung der zugewiesenen Ladestation (14) zu dem zugewiesenen Zeitpunkt des Ladebeginns und über die errechnete Ladedauer für das bestimmte Kraftfahrzeug (12) vornimmt.

8. Datenverarbeitungseinheit (10) nach Anspruch 4 oder 7,
**dadurch gekennzeichnet, dass**
die Datenverarbeitungseinheit (10) derart ausgelegt ist, dass nach einer vorgenommenen Reservierung einer bestimmten Ladestation (14) für mindestens ein Kraftfahrzeug (12) die Datenverarbeitungseinheit (10) die verfügbare Ladeleistung an der Ladestation (14) für einen vorgebbaren Zeitpunkt neu berechnet.

9. Verfahren zum Betrieb einer Datenverarbeitungseinheit (10), welche mittels einer ersten Schnittstelle erste Informationen mit einer Vielzahl von Kraftfahrzeugen (12) und mittels einer zweiten Schnittstelle zweite Informationen mit einer Vielzahl von Ladestationen (14) zum Aufladen einer Energiespeichereinrichtung eines Kraftfahrzeugs (12) austauscht, umfassend die folgenden Schritte:
(a) Erfassen eines Ladezustands zu einem Zeitpunkt einer gewünschten Aufladung der Energiespeichereinrichtung mindestens eines bestimmten Kraftfahrzeugs (12) und Erfassen einer maximalen Ladeleistung desselbigen Kraftfahrzeugs (12),
(b) Ermitteln einer verfügbaren Ladeleistung zu dem Zeitpunkt einer gewünschten Aufladung des bestimmten Kraftfahrzeugs (12) an wenigstens einer Ladestation (14), und
(c) Erstellen einer Strategie, bei der einem bestimmten Kraftfahrzeug (12) eine bestimmte Ladestation (14) und ein bestimmter Zeitpunkt eines Ladebeginns unter Berücksichtigung wenigstens eines vorgebbaren Parameters zugewiesen wird
**dadurch gekennzeichnet, dass**
wenigstens einer der vorgebbaren Parameter derart ausgebildet ist, dass ein bestimmtes Kraftfahrzeug (12) zu derjenigen Ladestation (14) zugewiesen wird, bei der eine größtmöglichste Nutzung der verfügbaren Ladeleistung an der Ladestation (14) zu dem Zeitpunkt des Ladebeginns erfolgt.

10. System, umfassend:
- eine Datenverarbeitungseinheit (10) nach einem der Ansprüche 1 bis 8;
- wenigstens ein Kraftfahrzeug (12) mit einer Energiespeichereinrichtung und mit einer Schnittstelle zum Austauschen von Informationen mit der Datenverarbeitungseinheit (10), wobei die Schnittstelle ausgelegt ist, Informationen über einen aktuellen Ladezustand der Energiespeichereinrichtung und eine maximale Ladeleistung des Kraftfahrzeugs (12) zu senden, und das Kraftfahrzeug (12) derart ausgelegt ist, dass es bei Empfang einer Zuweisung zu einer Ladestation (14) und zu einem Zeitpunkt eines Ladebeginns einem Nutzer des Kraftfahrzeugs (12) eine Zustimmung oder eine Ablehnung der Zuweisung bereitstellt; und
- wenigstens eine Ladestation (14) zum Aufladen einer Energiespeichereinrichtung eines Kraftfahrzeugs (12) und mit einer Schnittstelle zum Austauschen von Informationen mit der Datenverarbeitungseinheit (10), wobei die Schnittstelle ausgelegt ist, Informationen über eine verfügbare Ladeleistung zu einem vorgebbaren Zeitpunkt zu senden.

11. System nach Anspruch 10, wobei das Kraftfahrzeug (12) ein Positionsbestimmungsmittel umfasst, welches derart ausgelegt ist, dass dieses Informationen mit der Schnittstelle austauscht, und die Schnittstelle ausgelegt ist, Informationen über eine Position des Kraftfahrzeugs (12) und über eine Ansteuerung eines Zielortes zu an die Datenverarbeitungseinheit (10) zu senden.

## Claims

1. Data processing unit (10) which comprises a first interface for exchanging first information with a plurality of motor vehicles (12) and a second interface for exchanging second information with a plurality of charging stations (14) for charging an energy storage device of a motor vehicle (12), wherein the data processing unit (10) is configured at the receipt of first information, which concerns a charging status at a point in time of a desired charging of the energy storage device and a maximum charging performance of at least one motor vehicle (12), and second information, which concerns a charging performance available at a predeterminable point in time at least one charging station (14), to construct a strategy by which a specified charging station (14) and a specified point in time of a charging start under consideration of at least one predeterminable parameter are allocated to a specified motor vehicle (12),
**characterised in that**
at least one of the predeterminable parameters is designed such that a specified motor vehicle (12) is assigned to that charging station (14) at which a greatest possible use of the available charging performance at the charging station (14) takes place at the point in time of the charging start.

2. Data processing unit (10) according to claim 1,
**characterised in that**
the data processing unit (10) is configured such that said data processing unit at an allocation of a specified motor vehicle (12) to a specified charging station (14) and at a specified point in time of the charging start by means of the first and second information about the charging status and the maximum charging performance of the motor vehicle (12) and the available charging performance at the charging station (14) at the point in time of the charging start determines a charging duration for the charging of the energy storage device of the specified motor vehicle (12).

3. Data processing unit (10) according to any of the preceding claims,
**characterised in that**
the data processing unit (10) is configured such that said data processing unit, at the reception of further information about a current position of a specified motor vehicle (12) and about a request for a directing to a target location by means of a position determining means of the motor vehicle (12) and via the first interface, determines the charging status of the motor vehicle (12) along a route between the current position of the motor vehicle (12) and the target location and determines a point in time of a recommended charging of the energy storage device and the charging status at this point in time.

4. Data processing unit (10) according to claim 3,
**characterised in that**
the data processing unit (10) is configured such that said data processing unit, at the reception of the further information about a request for a directing to a target location by means of the position determining means of the specified motor vehicle (12) automatically undertakes a reservation of one of the suitable charging station (14) determined by the strategy at a determined suitable point in time of a charging start and for the calculated charging duration.

5. Data processing unit (10) according to any of claims 1 to 3,
**characterised in that**
the data processing unit (10) is configured such that said data processing unit receives via the first interface a further information regarding a confirmation or a rejection of an allocation of a specified motor vehicle (12) to one of the charging stations (14) and at a specified point in time of the charging start.

6. Data processing unit (10) according to claim 5,
**characterised in that**
the data processing unit (10) is configured such that said data processing unit, at the receipt of a rejection of the allocation generates at least one alternative allocation with an alternative charging station (14) and or an alternative point in time of the charging start for the specified motor vehicle (12).

7. Data processing unit (10) according to claim 5 or 6,
**characterised in that**
the data processing unit (10) is configured such that, at receipt of an agreement for the allocation, it undertakes an automatic reservation of the allocated charging station (14) at the allocated point in time of the charging start and for the calculated charging duration for the specified motor vehicle (12).

8. Data processing unit (10) according to claim 4 or 7,
**characterised in that**
the data processing unit (10) is configured such that after an undertaken reservation of a specified charging station (14) for at least one motor vehicle (12) the data processing unit (10) recalculates the available charging performance at the charging station (14) for a predeterminable point in time.

9. Method for operating a data processing unit (10) which by means of a first interface exchanges first information with a plurality of motor vehicles (12) and by means of a second interface exchanges second information with a plurality of charging stations (14) for the charging of an energy storage device of a motor vehicle (12),
comprising the following steps:
a) Detecting a charging status at a point in time of a desired charging of the energy storage device of at least one specified motor vehicle (12) and detecting a maximum charging performance of the same motor vehicle (12),
b) determining an available charging performance at the point in time of a desired charging of the specified motor vehicle (12) at at least one charging station (14), and
c) creating a strategy, under which a specified charging station (14) and a specified point in time of a charging start, under consideration of at least one predeterminable parameter, are allocated to a specified motor vehicle (12)
**characterised in that**
at least one of the predeterminable parameters is designed such that a specified motor vehicle (12) is allocated to that charging station (14) at which a greatest possible use of the available charging performance occurs at the charging station (14) at the point in time of the charging start.

10. System, comprising:
- a data processing unit (10) according to any of claims 1 to 8;
- at least one motor vehicle (12) having an energy storage device and having an interface for the exchanging of information with the data processing unit (10), wherein the interface is configured to send information about current charging status of the energy storage device and a maximum charging performance of the motor vehicle (12), and the motor vehicle (12) is configured that when it receives an allocation to a charging station (14) and at a point in time of a charging start, it provides for a user of the motor vehicle (12) a confirmation or a rejection of the allocation; and
- at least one charging station (14) for the charging of an energy storage device of a motor vehicle (12) and having an interface for the exchanging of information with the data processing unit (10), wherein the interface is configured to send information regarding an available charging performance at a predeterminable point in time.

11. System according to claim 10, wherein the motor vehicle (12) comprises a position determining means which is configured such that said position determining means exchanges information with the interface, and the interface is configured to send information regarding a position of the motor vehicle (12) and regarding a directing to a target location to to the data processing unit (10).

## Revendications

1. Unité de traitement de données (10), laquelle comprend une première interface pour l'échange de premières informations avec une pluralité de véhicules automobiles (12) et une deuxième interface pour l'échange de deuxièmes informations avec une pluralité de stations de charge (14) pour la charge d'un dispositif accumulateur d'énergie d'un véhicule automobile (12), dans laquelle l'unité de traitement de données (10) est conçue pour établir, lors de la réception de la première information, qui concerne un état de charge à un moment d'une charge souhaitée du dispositif accumulateur d'énergie et une puissance de charge maximum d'au moins un véhicule automobile (12), et de la deuxième information, qui concerne une puissance de charge disponible à un moment pouvant être prédéfini à au moins une station de charge (14), une stratégie, pour laquelle une station de charge (14) déterminée et un moment déterminé d'un début de charge sont assignés à un véhicule automobile (12) déterminé en tenant compte d'au moins un paramètre pouvant être prédéfini,
**caractérisée en ce que**
au moins un des paramètres pouvant être prédéfinis est réalisé de sorte qu'un véhicule automobile (12) déterminé soit assigné à la station de charge (14), pour laquelle il y a la plus grande utilisation possible de la puissance de charge disponible à la station de charge (14) au moment du début de charge.

2. Unité de traitement de données (10) selon la revendication 1,
**caractérisée en ce que**
l'unité de traitement de données (10) est conçue de sorte que celle-ci détermine, lors d'une assignation d'un véhicule automobile (12) déterminé à une station de charge (14) déterminée et à un moment déterminé du début de charge par les première et deuxième informations sur l'état de charge et la puissance de charge maximum du véhicule automobile (12) et la puissance de charge disponible à la station de charge (14) au moment du début de charge, une durée de charge pour la charge du dispositif accumulateur d'énergie du véhicule automobile (12) déterminé.

3. Unité de traitement de données (10) selon l'une quelconque des revendications précédentes,
**caractérisée en ce que**
l'unité de traitement de données (10) est conçue de sorte que celle-ci détermine, lors de la réception d'une autre information sur une position actuelle d'un véhicule automobile (12) déterminé et sur une demande d'une approche d'un lieu cible par un moyen de détermination de position du véhicule automobile (12) et sur la première interface, l'état de charge du véhicule automobile (12) le long d'un trajet entre la position actuelle du véhicule automobile (12) et le lieu cible et détermine un moment d'une charge recommandée du dispositif accumulateur d'énergie et l'état de charge à ce moment.

4. Unité de traitement de données (10) selon la revendication 3,
**caractérisée en ce que**
l'unité de traitement de données (10) est conçue de sorte que celle-ci procède automatiquement, lors de la réception de l'autre information sur une demande d'une approche d'un lieu cible par le biais du moyen de détermination de position du véhicule automobile (12) déterminé, à une réservation d'une des station de charge (14) adaptée déterminée par la stratégie à un moment adapté déterminé d'un début de charge et pendant la durée de charge calculée.

5. Unité de traitement de données (10) selon l'une quelconque des revendications 1 à 3,
**caractérisée en ce que**
l'unité de traitement de données (10) est conçue de sorte que celle-ci reçoive une autre information sur une acceptation ou un refus d'une assignation d'un véhicule automobile (12) déterminé à une des stations de charge (14) et à un moment déterminé du début de charge par le biais de la première interface.

6. Unité de traitement de données (10) selon la revendication 5,
**caractérisée en ce que**
l'unité de traitement de données (10) est conçue de sorte qu'elle établisse, lors de la réception d'un refus de l'assignation, au moins une assignation alternative avec une station de charge (14) alternative et/ou un moment alternatif du début de charge pour le véhicule automobile (12) déterminé.

7. Unité de traitement de données (10) selon la revendication 5 ou 6,
**caractérisée en ce que**
l'unité de traitement de données (10) est conçue de sorte qu'elle procède, lors de la réception d'une acceptation de l'assignation, à une réservation automatique de la station de charge (14) assignée au moment assigné du début de charge et pendant la durée de charge calculée pour le véhicule automobile (12) déterminé.

8. Unité de traitement de données (10) selon la revendication 4 ou 7,
**caractérisée en ce que**
l'unité de traitement de données (10) est conçue de sorte que, après une réservation effectuée d'une station de charge (14) déterminée pour au moins un véhicule automobile (12), l'unité de traitement de données (10) recalcule la puissance de charge disponible à la station de charge (14) pour un moment pouvant être prédéfini.

9. Procédé de fonctionnement d'une unité de traitement de données (10), laquelle échange des premières informations avec une pluralité de véhicules automobiles (12) au moyen d'une première interface et des deuxièmes informations avec une pluralité de stations de charge (14) pour la charge d'un dispositif accumulateur d'énergie d'un véhicule automobile (12) au moyen d'une deuxième interface,
comprenant les étapes suivantes :
(a) détection d'un état de charge à un moment d'une charge souhaitée du dispositif accumulateur d'énergie d'au moins un véhicule automobile (12) déterminé et détection d'une puissance de charge maximum du même véhicule automobile (12),
(b) détermination d'une puissance de charge disponible au moment d'une charge souhaitée du véhicule automobile (12) déterminé à au moins une station de charge (14), et
(c) établissement d'une stratégie, pour laquelle une station de charge (14) déterminée et un moment déterminé d'un début de charge sont assignés à un véhicule automobile (12) déterminé en tenant compte d'au moins un paramètre pouvant être prédéfini,
**caractérisé en ce que**
au moins un des paramètres pouvant être prédéfinis est réalisé de sorte qu'un véhicule automobile (12) déterminé soit assigné à la station de charge (14), pour laquelle il y a la plus grande utilisation possible de la puissance de charge disponible à la station de charge (14) au moment du début de charge.

10. Système, comprenant :
- une unité de traitement de données (10) selon l'une quelconque des revendications 1 à 8 ;
- au moins un véhicule automobile (12) avec un dispositif accumulateur d'énergie et avec une interface pour l'échange d'informations avec l'unité de traitement de données (10), dans lequel l'interface est conçue pour envoyer des informations sur un état de charge actuel du dispositif accumulateur d'énergie et une puissance de charge maximum du véhicule automobile (12), et le véhicule automobile (12) est conçu de sorte qu'il fournisse, lors de la réception d'une assignation à une station de charge (14) et à un moment d'un début de charge, une acceptation ou un refus de l'assignation à un utilisateur du véhicule automobile (12) ; et
- au moins une station de charge (14) pour la charge d'un dispositif accumulateur d'énergie d'un véhicule automobile (12) et avec une interface pour l'échange d'informations avec l'unité de traitement de données (10), dans lequel l'interface est conçue pour envoyer des informations sur une puissance de charge disponible à un moment pouvant être prédéfini.

11. Système selon la revendication 10, dans lequel le véhicule automobile (12) comprend un moyen de détermination de position, lequel est conçu de sorte que celui-ci échange des informations avec l'interface, et l'interface est conçue pour envoyer des informations sur une position du véhicule automobile (12) et sur une approche d'un lieu cible à l'unité de traitement de données (10).
